# EUROPEAN PATENT SPECIFICATION

(11) **EP 3 040 145 B1**
(45) Date of publication and mention of the grant of the patent: **04.04.2018**
(21) Application number: 15202882.5
(22) Date of filing: 29.12.2015
(51) Int. Cl.: B23C 3/30, B23Q 39/02, B23C 5/10, B23Q 5/04

(54) **MILLING METHOD FOR MAKING GROOVES ALONG A CAVITY WHICH EXTENDS IN A WORKPIECE**
FRÄSVERFAHREN ZUR HERSTELLUNG VON NUTEN ENTLANG EINES HOHLRAUMS, DIE SICH IN EINEM WERKSTÜCK ERSTRECKEN
PROCÉDÉ DE FRAISAGE POUR PRODUIRE DES RAINURES LE LONG D'UNE CAVITÉ QUI S'ÉTEND DANS UNE PIÈCE

(30) Priority: 29.12.2014 IT MI20142261; 29.12.2014 IT MI20142262
(43) Date of publication of application: 06.07.2016
(73) Proprietor: Freni Brembo S.p.A., 24035 Curno (Bergamo) (IT)
(72) Inventor: CARMINATI, Fabiano, I-24035 Curno, BERGAMO (IT); GHIRARDELLI, Enrico, I-24035 Curno, BERGAMO (IT)
(74) Representative: Crippa, Paolo Ernesto

(56) References cited:
- DE-A1- 3 006 645
- DE-A1- 3 141 657
- DE-A1-102006 021 946
- FR-A- 1 256 688
- US-A1- 2009 308 214
- US-A1- 2012 189 394
- US-A1- 2013 085 049
- US-A1- 2013 272 813

## Description

The present invention relates to a milling machining method for making at least one groove along an inner wall of a cavity, e.g. a cylindrical cavity, which extends in a workpiece. In particular, the invention relates to a method for making at least one axial groove along a central through cavity of a braking band of a braking disc of a disc brake.

A particular type of disc brake for vehicles uses a brake disc comprising an annular braking band defined by an inner cylindrical surface and by an outer cylindrical surface, which are coaxial to each other along a common rotation axis, and two flat friction surfaces parallel to each other and orthogonal to the rotation axis. Such a brake disc further comprises a bell-shaped support adapted to engage the annular band at the aforesaid inner cylindrical surface in a central position with respect to the braking band.

The bell-shaped support then comprises means for the mounting on a vehicle, in particular on the wheel hub of the vehicle, for example to make such a disc integral with a wheel support axis.

The disc brake further comprises pads adapted to be pressed in a controlled manner against the friction surfaces of the braking band to apply, when required, a braking action which opposes the rotation of the disc and therefore of the wheels.

Known brake discs consist of a braking band and of a bell-shaped support which can be assembled together and allow the braking band to be made of a different material from that of the bell-shaped support, in order to select materials which are suitable for optimizing the mechanical features of the support and the friction features of the braking band.

Moreover, the friction between the braking band and the pads during a braking action generates a large quantity of heat in the braking band; for this reason, certain discs having braking band separate from the bell-shaped support are configured to allow the radial sliding therebetween and to allow a different thermal expansion between braking band and bell-shaped support.

The above-mentioned discs require suitable coupling surfaces between braking band and support. In particular, a plurality of cavities or axial grooves are often made along the inner cylindrical surface of the braking band to facilitate or improve the rotation restraint between bell and braking band. Such cavities are distributed circumferentially along such a surface and extend parallel to the rotation axis of the disc.

In addition to being made in a large number to allow a homogenous coupling between braking band and bell-shaped support, the cavities or grooves require a high surface finishing quality.

Disc brakes are mass production products and therefore require very high production frequencies. This need is strongly felt due to the lengthy production times required to manufacture multiple cavities or grooves with increased surface finishing in the central cavity, cylindrical central opening of the braking band according to the known art currently used.

In fact, such a known art includes first making an axial groove by means of a roughing milling, and then a finishing milling along the groove itself to obtain the surface quality desired.

According to the known art, in order to perform these two separate machining operations, a first orthogonal milling head is used, being equipped with a roughing tool, and then a second tool machine provided with a head with finishing tool, or a second orthogonal milling head equipped with a different finishing tool.

These operations need to be repeated for the number of cavities to be made.

This known art results in the disadvantage of requiring lengthy machining times which are incompatible with a mass production, thus leading to high costs of each individual workpiece.

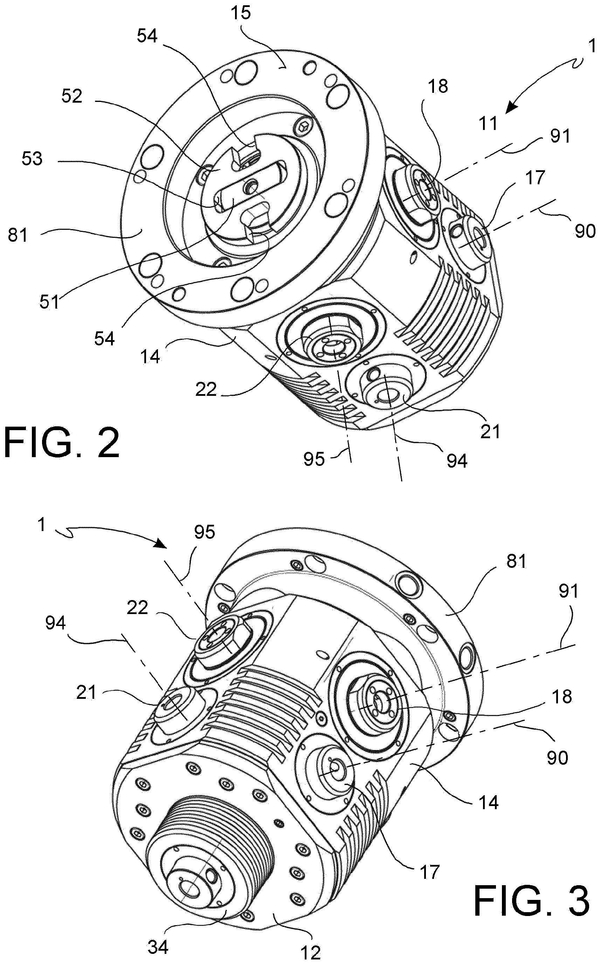

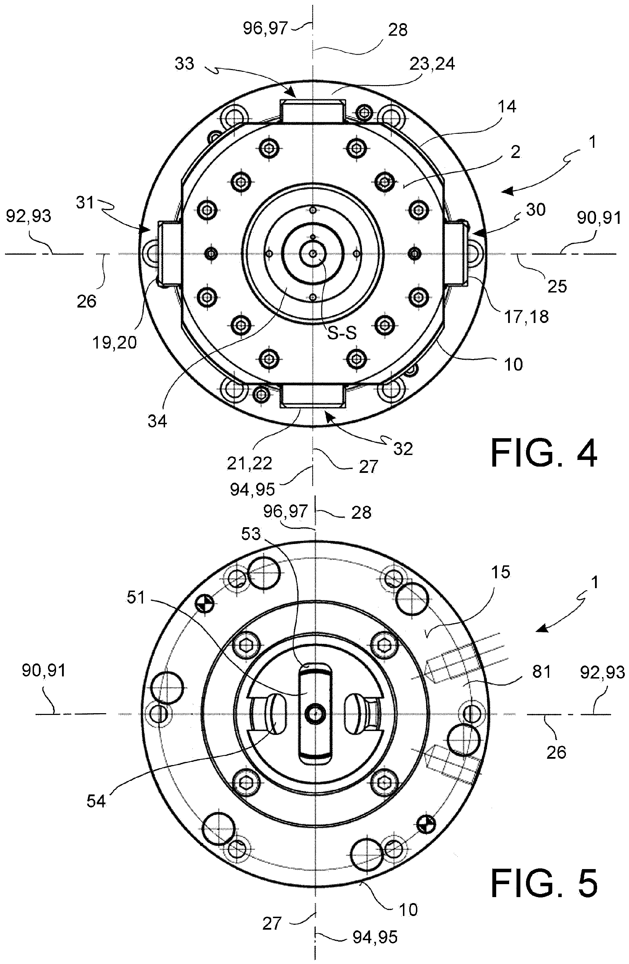

Another disadvantage of such a known art is the impossibility of obtaining an adequate geometrical and finishing accuracy due to the need to use different machining heads or different set-ups, which machining operations result in repositioning the axes for moving the tool close to the workpiece and therefore compensating for the clearances of the kinematic chains of these axes, which can never be perfectly repeated to the point of replicating the same machining tolerances exactly. This known art thus results in machining errors and in any event high machining tolerances, which are incompatible with the coupling surfaces between the braking band and the bell-shaped support thereof. US 2013/272813 discloses an example of a milling method for making and/or finishing at least one groove (see figure 5) having a predefined groove extension axis (see figure 5) in a wall (17), comprising the steps of: providing at least one group (18, 20) of milling tools comprising a roughing tool (18) suitable to be rotated around a roughing axis (implicit), and a finishing tool (staggered milling tool 18) suitable to be rotated around a finishing axis (implicit); arranging said roughing tool (57, 59, 61, 63) and said finishing tool (58, 60, 62, 64) respectively with said roughing axis (90, 92, 94, 96) and said finishing axis (91, 93, 95, 97) aligned on a same plane (25, 26, 27, 28) passing through a machining feed axis (11); aligning said feed axis (11) parallel to the groove extension axis (see figure 5) so that said roughing tool (18) and said finishing tool (18, staggered) can travel along said groove extension axis (see figure 2); rotating said roughing tool (18) in a removal machining movement around said roughing axis (implicit); rotating said finishing tool (18) in a finishing machining movement around said finishing axis (implicit); moving said at least one group of tools (14) along said feed axis (11) so that said roughing tool (18) makes or finishes said at least one groove (see figure 5) in said wall (17) travelling along said groove axis (see figure 5); continuing to move said at least one group of tools (14) along said feed axis (11) so that said finishing tool (18) finishes said at least one groove (see figure 5) performing a finishing operation of said at least one groove (see figure 5).

It is the object of the present invention to devise and make available a milling machining method which allows the aforesaid needs to be met while at least partly obviating the drawbacks indicated above with reference to the known art.

In particular, it is the object of the present invention to provide a machining method which allows the same surface to be machined while forming a groove with at least two different milling tools, thus limiting the machine movements to a single movement of a feeding axis.

It is another object of the present invention to provide a milling machining method which allows at least one axial groove to be made on the inner wall of a cavity, in particular a cylindrical cavity, by performing a roughing step and a finishing step while minimizing the number of machine movements and of feeding movements of the tools.

It is a further object of the present invention to provide a machining method which allows a plurality of axial cavities to be made on the inner wall of a cylindrical cavity, in which such cavities have a high level of surface finishing and an increased geometrical accuracy, while allowing such a machining operation to be performed in times suitable for a mass production.

It is a further object of the present invention to allow several machining operations on the same groove while avoiding axis movements of the tool machine other than the feeding of the head.

These and other objects are achieved by a milling method according to claim 1.

Certain advantageous embodiments are the object of the dependent claims.

According to a general aspect of the present invention, a milling method for making and/or finishing at least one groove having a predefined groove extension axis in a wall of a cavity in a workpiece, comprises the steps of providing at least one group of milling tools comprising a roughing tool adapted to be rotated about a roughing axis and a finishing tool adapted to be rotated about a finishing axis, and of arranging said roughing tool and said finishing tool with said roughing axis and said finishing axis respectively aligned on the same plane passing through a machining feeding axis.

The feeding axis is aligned parallel to the groove extension axis so that the roughing tool and the finishing tool can travel along the groove extension axis.

The roughing tool and the finishing tool are rotated about a respective roughing and finishing axis thereof.

The method comprises a step of moving the at least one group of tools along the feeding axis so that the roughing tool makes or finishes the at least one groove by travelling along the groove axis.

The method further comprises a step of continuing to move the at least one group of tools along the feeding axis so that the finishing tool finishes said at least one groove by performing a finishing machining operation of the at least one groove.

Thereby, the groove roughed previously by means of the roughing tool is traveled again and finished by means of a finishing tool - albeit with cutter suitable for finishing - belonging to the same group of tools to which the roughing tool belongs, and arranged downstream of the roughing tool. The finishing step is performed during a machining feeding movement of the group of tools which is a continuation of the feeding movement of the roughing tool.

In other words, the sequential machining of the same groove with two different tools, a roughing tool and a finishing tool, is performed and completed by means of a single movement of the group of tools along the feeding axis.

For this reason, there is no need to replace the tool and no need to replace the milling head to perform the two machining operations. Moreover, the different machining operations are carried out by means of the same feeding movement of the tools, thus avoiding any reversal of the feeding direction.

No positioning error is possible between the roughing tool and the finishing tool.

All clearances possibly existing in the movement axes of the tool machine are compensated for due to the solution proposed. In other words, all machining tolerances due to the clearances on the movement axes of the tool machine are minimized as there are no linear or angular changes in direction between roughing and finishing.

These aspects result in the apparent and significant advantage of obtaining a high level of surface machining quality of the groove.

In particular, the method according to the invention may comprise a step of providing four groups of milling tools, each group comprising a roughing tool and a finishing tool.

Moreover, a step of arranging the four groups of tools on four respective planes passing through a common machining feeding axis, in which such four planes are orthogonal to one another, may be included.

This feature allows the aforesaid advantages to be produced simultaneously on four different cavities. Thereby, the roughing and finishing operations of four different cavities may indeed be completed simultaneously and with the same surface finishing quality. The four cavities are all completely made in the time required to make a single one. This allows a high production frequency to be obtained and the machining costs to be reduced.

The machining method advantageously comprises a step of arranging the roughing tool of all the at least one group of tools on the same roughing plane orthogonal to the feeding axis.

The method may further comprise the step of arranging the finishing tool of all the at least one group of tools on the same finishing plane orthogonal to the feeding axis.

Thereby, all the roughing tools of the different groups of tools may attack the workpiece simultaneously, thereby balancing the reactions of the machining forces on all such tools being machined. The result of such reactions on a milling head which carries the tools through rotating spindles mounted on the head is the alignment with the machining feeding axis of the tools, thus avoiding undesired twisting or misalignments of the head and therefore avoiding possible subsequent machining errors. Therefore, this feature contributes to obtaining a high machining quality.

The step of moving the at least one group of tools along the feeding axis and the step of continuing to move the at least one group of tools along the feeding axis may advantageously be carried out with translation continuity of the at least one group of tools along the feeding axis while completely crossing said through cavity.

In particular, the step of moving the at least one group of tools is performed according to a first feeding speed value suitable for performing a roughing of said groove, and wherein said step of continuing to move said at least one group of tools is performed according to a second feeding speed value suitable for performing a finishing of said groove. Thereby, the cutting speed of the roughing and finishing tools may be optimized in a different manner in order to obtain maximum productivity and surface quality simultaneously.

The machining method may advantageously comprise a further step of extracting the at least one group of milling tools from said cavity after completing the machining of said at least one groove in the workpiece, by moving back said at least one group of tools; rotating the workpiece about the feeding axis according to a predefined angle up to a new angular position, making at least one further groove in such a new angular position following said extraction step.

Thereby, a large number of equal machining operations may be carried out by simply rotating the workpiece by a predefined angle about the feeding axis of the tools, and the machining operation of the group of machining operations already performed may be repeated. This second group of machining operations is also performed on the same set-up of the workpiece, thus avoiding disassembling the workpiece from the workpiece table and to be repositioned. Thereby, by using a rotatable workpiece table with accurate predefined angles, an increased accuracy may be achieved in positioning the workpiece between the machining operations performed in the first angular position and those performed in the second angular position of the workpiece.

Further features and advantages of the present invention will become apparent from the following description of preferred embodiments thereof, given only by way of a non-limiting, indicative example, with reference to the accompanying drawings, in which:

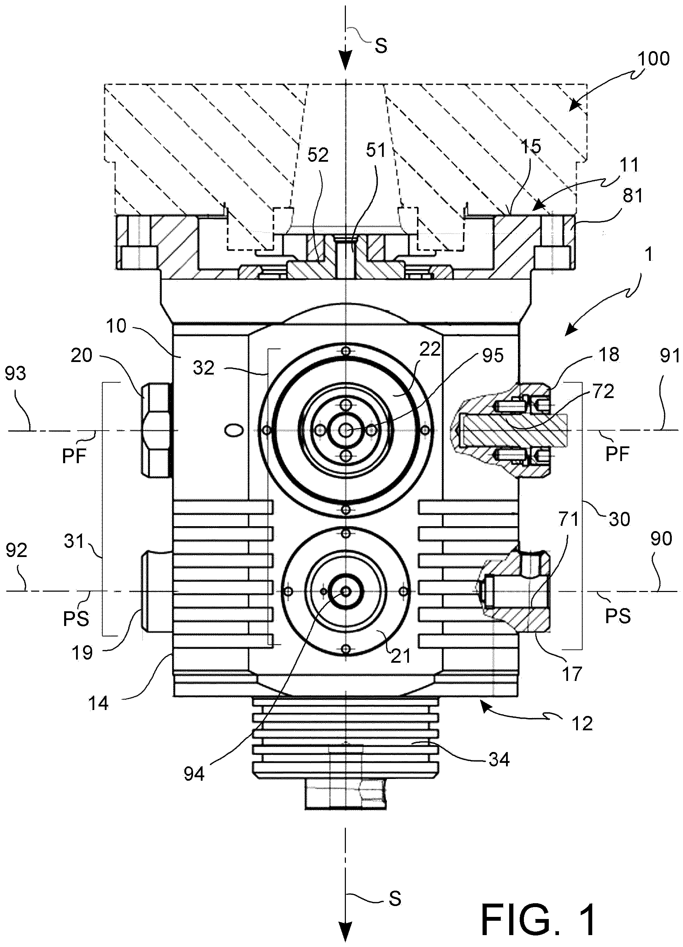

- figure 1 shows a side view of a milling head for performing the method according to the invention;
- figures 2 and 3 show two different perspective views of the milling head in figure 1, top and bottom views, respectively;
- figures 4 and 5 show two different axonometric views of the milling head in figure 1, top and bottom views, respectively;

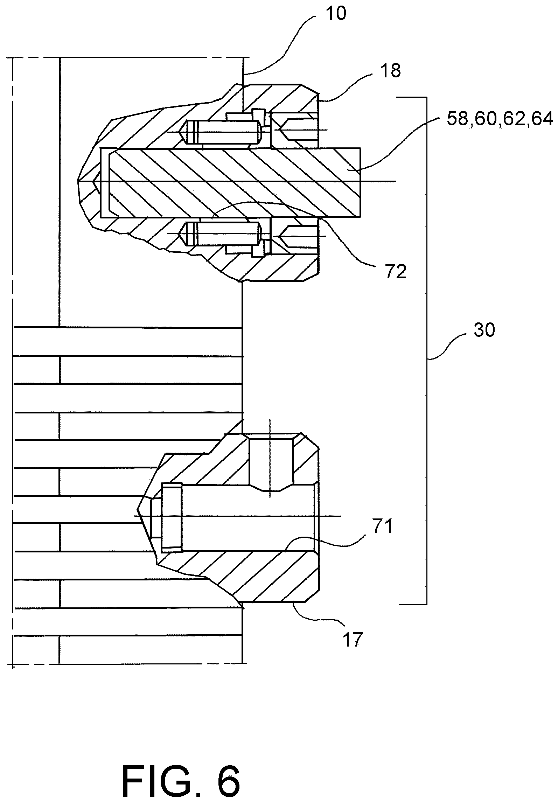

- figure 6 shows a sectioned detail of a portion of the milling head in figure 1, comprising a seat for the roughing tool and a seat for the finishing tool;
- figure 7 shows an exploded perspective view of the one milling head in figure 1;
- figure 8 shows a roughing tool which can be used by the milling head in figure 1;
- figure 9 shows a finishing tool which can be used by the milling head in figure 1;
- figure 10 shows a bottom view of the milling head in figure 1, working along the inner surface of the central cavity of a braking band;
- figure 11 shows a partial view of a braking band of a brake disc to be machined with the milling head in figure 1, in which an inner cavity portion to be machined is shown;

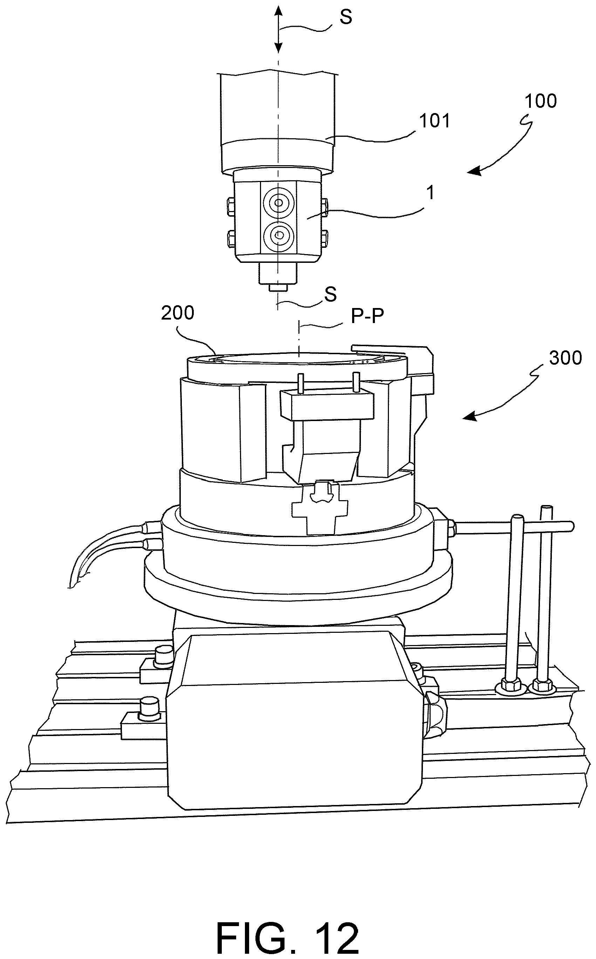

- figure 12 shows a milling machine equipped with the head in figure 1;

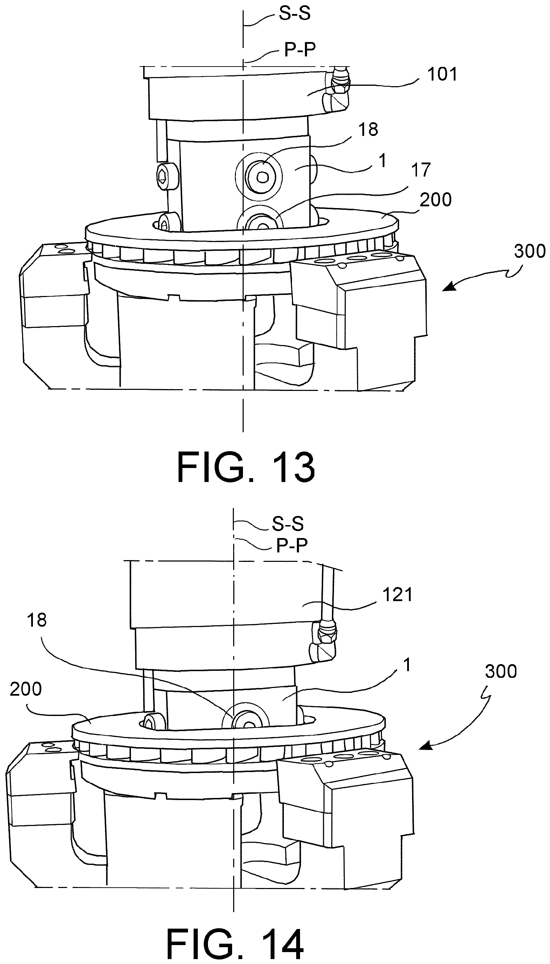

- figure 13 shows a step of roughing cavities in a brake disc according to the method of the present invention;
- figure 14 shows a step of finishing cavities in a brake disc according to the method of the present invention.

With reference to the drawings, a milling method is shown for making at least one groove 204 having a predefined groove axis (C-C) in a wall 203, e.g. a side wall, of a cavity 202 in a workpiece 200, e.g. a through cavity 202.

It comprises a step of providing at least one group of milling tools 30, 31, 32, 33 comprising a roughing tool 57, 59, 61, 63 and a finishing tool 58, 60, 62, 64, and of arranging said roughing tool and said finishing tool aligned on the same plane 25 passing through a controlled machining feeding axis S-S, e.g. numerically controlled.

The roughing tool 57, 59, 61, 63 is adapted to be rotated about a roughing axis 90, 92, 94, 96, and the finishing tool 58, 60, 62, 64 is adapted to be rotated about a finishing axis 91, 93, 95, 97.

Such a method further comprises a step of aligning said feeding axis S-S with the cavity 202 of the workpiece 200 so that said group of tools can be introduced into said cavity 202.

Each roughing tool 57, 59, 61, 63 is mounted in a respective roughing spindle 17, 19, 21, 23.

Likewise, each finishing tool 58, 60, 62, 64 is mounted in a respective finishing spindle 18, 20, 22, 24.

All the roughing spindles 17, 19, 21, 23 and all the finishing spindles 18, 20, 22, 24 are mounted in a single milling head 1.

Head 1 is moved so as to align the feeding axis S-S with the axis of cavity 202 of which the inner cylindrical wall 203 is to be machined, so that said group of tools can be introduced into said cavity 202.

In other words, head 1 is moved so as to align the feeding axis S-S with the axis of cavity 202 of which the inner cylindrical wall 203 is to be machined.

The roughing tool 57, 59, 61, 63 and the finishing tool 58, 60, 62, 64 are rotated about the axes thereof, thus rotating the respective roughing spindles 17, 19, 21, 23 and finishing spindles 18, 20, 22, 24 supporting them.

Head 1 may be moved along the feeding axis S-S of the head by translating the head inlet into the cavity to be machined. During the feeding of the head, the roughing tools come in contact with the workpiece by roughing the cavity(s) 204 in the workpiece 200 along a direction parallel to the feeding direction S-S. This feeding movement may be performed in a numerically controlled manner.

By continuing the feeding movement of the roughing 57, 59, 61, 63 and finishing tools 58, 60, 62, 64, and therefore of head 1, in the same direction along the feeding axis, the finishing tools 58, 60, 62, 64 enter the corresponding cavities already roughed in the preceding roughing step while performing a finishing machining operation of said groove.

In accordance with one embodiment, the step of providing at least one group of milling tools comprising a roughing tool 57, 59, 61, 63 and a finishing tool 58, 60, 62, 64 is replaced by a step of providing four groups of milling tools, each group comprising a roughing tool 57, 59, 61, 63 and a finishing tool 58, 60, 62, 64.

In accordance with one embodiment, the step of arranging the roughing tool and the finishing tool aligned on the same plane 25, 26, 27, 28 passing through a machining feeding axis S-S is replaced by a step of arranging the four groups of tools on four respective planes 25, 26, 27, 28 passing through a common machining feeding axis S-S, in which such four planes 25, 26, 27, 28 are orthogonal to one another.

In accordance with one embodiment, the roughing axis 90, 92, 94, 96 and the finishing axis 91, 93, 95, 97 are substantially transversal to the groove extension axis C-C.

In accordance with one embodiment, the finishing tool 58, 60, 62, 64 is arranged downstream of the finishing tool 58, 60, 62, 64 in the feeding direction of said tools.

According to one embodiment, a further step of aligning said feeding axis S-S with the axis P-P of said cavity 202 of the workpiece 200 is included, so that said at least one group of tools 30, 31, 32, 33 can make or finish said cavity 202.

In accordance with one embodiment, a step of arranging the roughing tool 57, 59, 61, 63 of all said at least one group 30, 31, 32, 33 of tools is included, so that the roughing axis 90, 92, 94, 96 of said roughing tool 57, 59, 61, 63 lies on the same roughing plane PS.

According to one embodiment, a step of arranging the finishing tool 58, 60, 62, 64 of all said at least one group 30, 31, 32, 33 of tools is included, so that the finishing axis 91, 93, 95, 97 of said finishing tool 58, 60, 62, 64 lies on the same finishing plane PF.

In accordance with one embodiment, the roughing plane PS is substantially orthogonal to the feeding axis S-S.

According to one embodiment, the finishing plane PS is substantially orthogonal to the feeding axis S-S.

In other words, the method may comprise a step of arranging the roughing tools 57, 59, 61, 63 of all groups of tools on the same roughing plane PS orthogonal to the feeding axis S-S.

Such a method may further comprise the step of arranging the finishing tools 58, 60, 62, 64 of all groups of tools on the same finishing plane PF orthogonal to the feeding axis S-S.

According to one embodiment, the step of moving the at least one group of tools along said feeding axis S-S and the step of continuing to move the at least one group of tools along the feeding axis S-S are carried out with translation continuity of said at least one group of tools along the feeding axis S-S while completely crossing cavity 202.

In other words, the step of moving the at least one group of tools 30, 31, 32, 33 along the feeding axis S-S and the step of continuing to move the at least one group of tools 30, 31, 32, 33 along the feeding axis S-S are carried out by means of the feeding movement alone along the feeding axis S-S while avoiding moving other feeding or positioning axes other than the feeding axis S-S.

In accordance with one embodiment, the step of moving the at least one group of tools is performed according to a first feeding speed value suitable for performing a roughing of groove 204.

Moreover, in accordance with one embodiment, the step of moving the at least one group of tools is performed according to a second feeding speed value suitable for performing a finishing machining operation of groove 204.

In accordance with one embodiment, the first speed value is greater than the second speed value.

In accordance with one embodiment, the movement of said at least one group of tools along said feeding axis S-S is numerically controlled.

In accordance with one embodiment, the roughing axis 90, 92, 94, 96 of each said roughing tool 57, 59, 61, 63 is incident to the feeding axis S-S.

According to one embodiment, the finishing axis 91, 93, 95, 97 of each said finishing tool 58, 60, 62, 64 is incident to the feeding axis S-S.

According to one embodiment, the roughing axis 90, 92, 94, 96 of each said roughing tool 57, 59, 61, 63 is substantially orthogonal to the feeding axis S-S.

In accordance with one embodiment, the finishing axis 91, 93, 95, 97 of each said finishing tool 58, 60, 62, 64 is substantially orthogonal to the feeding axis S-S.

In accordance with one embodiment, the machining method comprises a further step of extracting the at least one group of milling tools from cavity 202 after completing the machining of said at least one groove 204 in the workpiece 200, by moving back the at least one group of tools.

A step of rotating the workpiece 200 about the feeding axis S-S according to a predefined angle up to a new angular position may then be included.

Now the preceding operations may be repeated to make a new series of cavities.

In accordance with one embodiment, the step of rotating the workpiece 200 is performed by rotating a rotatable workpiece table 300 by predefined angles, about a rotation axis coinciding with the machining feeding axis S-S.

The rotation of the workpiece table 300 may be performed by motor means, and such a rotation can be numerically controlled.

The aforesaid machining method allows a plurality of axial cavities to be made on the inner wall of a cylindrical cavity, in which such cavities have a high level of surface finishing and an increased geometrical accuracy, while allowing such a milling operation to be performed in times suitable for a mass production.

According to another aspect, the method according to the invention may be performed by means of a milling head 1, as described in the accompanying drawings.

Head 1 comprises a main body 10 which defines an extension axis of the head along which the main body 10 extends. The main body has a connection end 11, adapted to be removably engaged at a corresponding connection end of a milling machine 100, e.g. having vertical axis, shown in figures from 12 to 14.

The feeding axis of the head coincides with the extension axis S-S of the milling head.

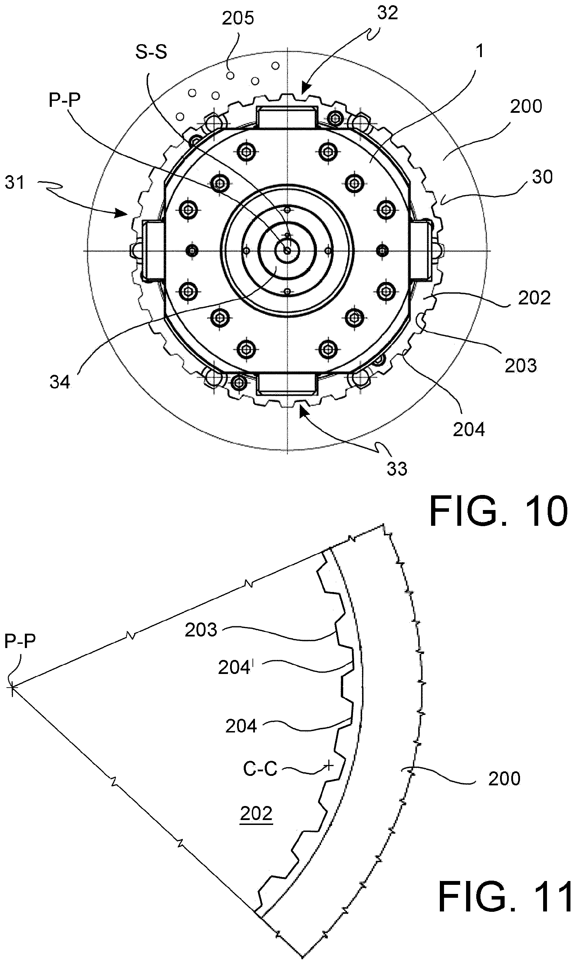

The main body 10 has a front end 12 opposite to the connection end 11 and adapted to be operatively introduced into a cylindrical cavity 202 of the workpiece 200, e.g. an annular braking band (Figures 10, 11), in order to make a plurality of axial cavities 204, i.e. in direction parallel to an extension axis of such an axial cavity.

The connection end 11 and the front end 12 of the main body 10 are connected by a side surface 14 of the main body 10.

According to one embodiment, the connection end 11 of the main body 10 consists of a substantially flat connection surface 15 orthogonal to the extension axis S-S of the milling head 1.

In other words, the main body 10 is substantially the shape of a cylinder.

The milling head 1 comprises at least a first group of spindles 30, 32 aligned parallel with each other on a first plane 25 passing through a feeding axis S-S of head 1, and at least a second group of spindles 31, 33 aligned parallel with each other on a second plane 26 passing through the same feeding axis S-S of the head, which is spaced apart by a preset angular quantity with respect to the first plane 25.

The at least a first group of spindles 30, 32 comprises a first roughing spindle 17 adapted to receive a first roughing cutter 57, and a first finishing spindle 18 adapted to receive a first finishing cutter 58.

Likewise, the at least a second group of spindles 31, 33 comprises a second roughing spindle 19 adapted to receive a second roughing cutter 59, and a second finishing spindle 20 adapted to receive a second finishing cutter 60.

Head 1 is configured so that at least a first group of spindles 30, 32 operates simultaneously with said at least a second group of spindles 31, 33.

Each finishing spindle 18, 20, 22, 24 is arranged downstream of a respective roughing spindle 17, 19, 21, 23 belonging to the same group of spindles, in the direction and in the machining feeding direction of the milling head 1, so that the roughing tools 57, 59, 61, 63 reach the workpiece 200 before the finishing tools 58, 60, 62, 64 when feeding head 1.

According to a preferred embodiment, the aforesaid at least a first group of spindles 30, 32 further comprises a third group of spindles 32 and the aforesaid at least a second group of spindles 31, 33 further comprises a fourth group of spindles 33.

The third group of spindles 32 comprises a third roughing spindle 21 adapted to receive a third roughing cutter 61 and a third finishing spindle 22 adapted to receive a third finishing cutter 62, in which the third roughing spindle 21 is aligned parallel to the third finishing spindle 22 on a third plane 27 passing through said feeding axis S-S of the head.

The fourth group of spindles 33 comprises a fourth roughing spindle 23 adapted to receive a fourth roughing cutter 63, a fourth finishing spindle 24 adapted to receive a fourth finishing cutter 64, in which the fourth roughing spindle 23 is aligned parallel to the fourth finishing spindle 24 on a fourth plane 27 passing through said feeding axis S-S of the head.

The head is configured so that the third group of spindles 32 operates simultaneously with said fourth group of spindles 33 and also simultaneously with said at least a first group of spindles 30 and with said at least a second group of spindles 31.

Each first group of spindles 30, 32 and each second group of spindles 31, 33 therefore lies on a respective lying plane passing through the feeding axis S-S of the head. In other words, all the roughing and finishing spindles are arranged in radial manner with respect to the feeding axis S-S of the head.

In one embodiment, all the roughing spindles 17, 19, 21, 23 are angularly equally spaced from one another and all the finishing spindles 18, 20, 22, 24 are angularly equally spaced from one another.

In one embodiment, all the lying planes are angularly equally spaced from one another.

In a preferred embodiment, the milling head 1 comprises four groups of spindles 30, 31, 32, 33 arranged on four respective lying planes 25, 26, 27, 28 passing through the feeding axis S-S of the milling head 1, said lying planes 25, 26, 27, 28 being perpendicular to one another.

Each roughing spindle 17, 19, 21, 23 defines a roughing spindle axis thereof, which is the axis about which such a roughing spindle may rotate.

Likewise, each finishing spindle 18, 20, 22, 24 defines a finishing axis thereof, which is the axis about which such a finishing spindle may rotate.

In accordance with one embodiment, the roughing spindles 17, 19, 21, 23 have the spindle axis thereof arranged orthogonal to the feeding axis S-S of the head.

In other words, the roughing spindles 17, 19, 21, 23 all lie on the same roughing plane PS substantially orthogonal to said feeding axis S-S of the head.

According to one embodiment, the finishing spindles 18, 20, 22, 24 have the spindle axis thereof arranged orthogonal to the feeding axis S-S of the head.

Therefore, the finishing roughing spindles 18, 20, 22, 24 also all lie on the same finishing plane PF substantially orthogonal to said feeding axis S-S of the head.

The aforesaid finishing plane PF is therefore preferably arranged downstream of said roughing plane PS along the direction and the feeding direction of said feeding axis S-S.

In accordance with one embodiment, all of said at least a first group of spindles 30, 32 and all of said at least a second group of spindles 31, 33 are substantially mutually equal.

In accordance with one embodiment, the milling head 1 comprises a transmission shaft 50 arranged in head 1, configured to transmit a cutting motion from a milling machine 100 directly to all the roughing spindles 17, 19, 21, 23 of the at least a first group of spindles 30, 32 and of said at least a second group of spindles 31, 33.

Moreover, in accordance with one embodiment, the transmission shaft 50 is configured to transmit a cutting motion from the milling machine 100 directly to all the finishing spindles 18, 20, 22, 24 of the at least a first group of spindles 30, 32 and of the at least a second group of spindles 31, 33.

In other words, the roughing spindles 17, 19, 21, 23 receive the cutting motion directly from shaft 50. As do all the finishing spindles 18, 20, 22, 24.

In other words, the transmission shaft 50 is configured to directly transmit the cutting motion both to the roughing spindles 17, 19, 21, 23 and to the finishing spindles 18, 20, 22, 24, thus avoiding transmitting the motion in series first to one from among a roughing spindle 17, 19, 21, 23 and a finishing spindle 18, 20, 22, 24 and then to the other from among the roughing spindle and the finishing spindle.

Thereby, a "parallel" transmission of the motion is obtained between transmission shaft 50 and each from among the finishing spindle and the roughing spindle.

Thereby, both the roughing spindle 16 and the finishing spindle 17 receive the motion from the transmission shaft 18 exactly in the same way, thus guaranteeing an increased machining accuracy and avoiding the accumulation of possible transmission clearances between individual spindles.

In accordance with one embodiment, the finishing head 1 comprises a first gear 40 having incident axes, comprising a first cogged wheel 42 keyed onto the transmission shaft 50 and a second cogged wheel 44 keyed onto each roughing spindle 17, 19, 20, 22, in which each second cogged wheel 44 meshes with the first cogged wheel 42.

In accordance with one embodiment, a second gear 41 having incident axes comprises a third cogged wheel 43 keyed onto the transmission shaft 50 and a fourth cogged wheel 45 keyed onto each finishing spindle 18, 20, 22, 24, in which each fourth cogged wheel 45 meshes with the third cogged wheel 43.

In accordance with one embodiment, the first gear 40 and the second gear 41 are gears having orthogonal axes.

In accordance with one embodiment, the first cogged wheel 42 and the second cogged wheels 44 are conical cogged wheels, in particular the third cogged wheel 43 and the fourth cogged wheels 45 are also conical cogged wheels.

In accordance with one embodiment, the milling head 1 comprises a front spindle 34 having a rotation axis of the front spindle 34 parallel to the feeding axis S-S of the head, for example having the rotation axis of the front spindle 34 coincident with the feeding axis S-S of the head.

For example, the front spindle 34 is coaxial with the transmission shaft 50 and is mounted at one free end of such a transmission shaft 50.

Thereby, spindle 34 may be actuated simultaneously with all the other spindles of the head.

The aforesaid front spindle 34 may carry a drilling tool, e.g. a drill tip, or a further mill, e.g. an end cutter.

In the field of machining brake discs, it is known to make a plurality of through holes 205 through the braking band 200, for example according to a direction parallel to the rotation axis of the disc, and parallel to the axis of the cylindrical through cavity 203 of the disc 200. In addition to lightening the disc, such holes have the further advantage of increasing the friction between disc and pads and the cooling of the disc.

When the milling head 1 is used to machine a braking band of a brake disc, the presence of the drilling tool is highly advantageous in that it allows a plurality of through holes 205 to be made in the braking band 200, while avoiding moving the disc or the workpiece.

Therefore, the presence of the front spindle allows both the drilling operations of the braking band 200 and of all the axial cavities in the axial cylindrical cavity to be performed with a single disc set-up on the milling machine 100.

Figures from 1 to 5 show a possible embodiment of the milling head 1 having four groups of spindles 30, 31, 32, 33 arranged radially with respect to the feeding axis S-S and orthogonal to one another. Such groups are therefore arranged diametrically opposite with respect to the feeding axis S-S. Each group of spindles comprises a roughing spindle 17, 19, 21, 23 and a finishing spindle 18, 20, 22, 24 arranged downstream of the roughing spindle of the same group. The front spindle 34 is arranged along the feeding axis S-S.

The connection end 11 comprises a flange element 81, e.g. annular, for the connection to the milling machine 100.

The transmission shaft 50 comprises, at a free rear and thereof 51, a coupling element 52 which can be engaged with a drive shaft of the milling machine 100 to transfer the cutting rotation torque from the drive shaft of the milling machine to the transmission shaft 50.

According to one embodiment, the coupling element 52 is disc-shaped having the central slot 53 adapted to receive the free rear end 51 of the transmission shaft 50, and adapted to transmit the cutting rotation motion to the transmission shaft 50.

Such a coupling element may also comprise opposite seats 54 which can be engaged with the drive shaft of the milling machine to transmit the rotation motion from the drive shaft of the milling machine to the coupling element 52.

According to one embodiment, the connection surface 15, e.g. a flat surface, delimits the flange element 81 at the top.

In accordance with one embodiment, the coupling element 52 is contained by such a connection surface 15, thus avoiding to protrude axially past such a connection surface 15.

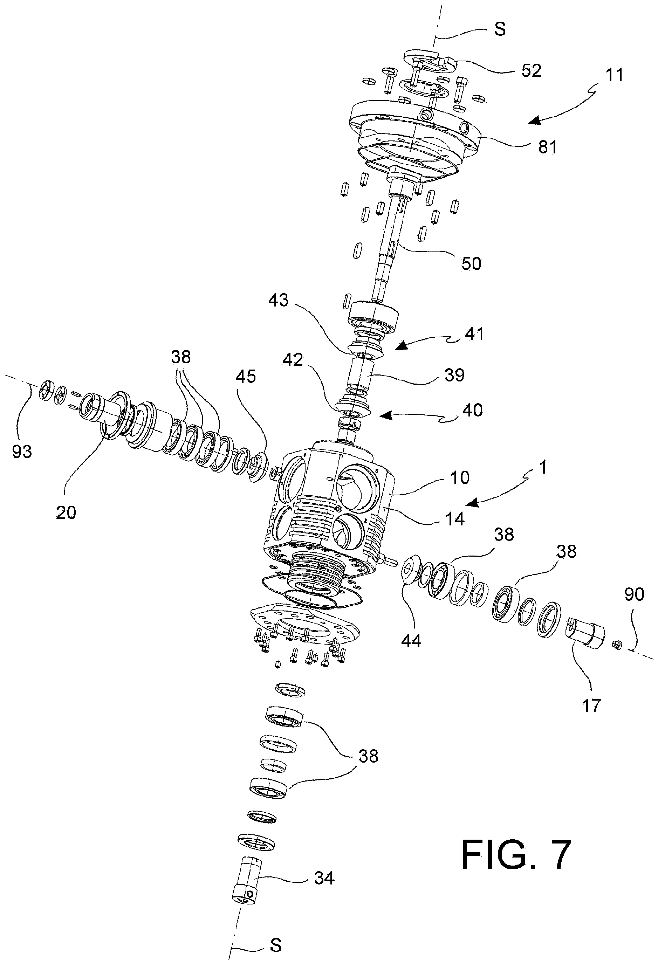

In accordance with one embodiment, for example shown in figure 7, a spacer 39, e.g. tubular, is interposed between the cogged wheel 43 for transmitting the cutting motion to the finishing spindles and the cogged tooth 42 for transmitting the motion to the roughing spindles so as to hold such cogged wheels 43 and 42 at a preset reciprocal distance. Thereby, an accurate transmission of the motion is ensured between the transmission shaft 50 and the spindles.

In accordance with one embodiment, all the spindles are pivotally carried in corresponding housings in the main body 10, by means of roll bearings or sleeve bearings 38.

In accordance with one embodiment, each roughing spindle 17, 19, 21, 23 comprises a front seat 71, 72 for milling tool, configured to receive a respective milling tool 58-64.

For example, such a seat 71, 72 is a blind cylindrical hole calibrated to receive a milling tool 58-64 delimited on the side by a cylindrical surface complementary to such a cylindrical hole 71, 72.

In accordance with one embodiment, all the roughing tools 57, 59, 61, 63 are mutually equal, and all the finishing tools 58, 60, 62, 64 are mutually equal.

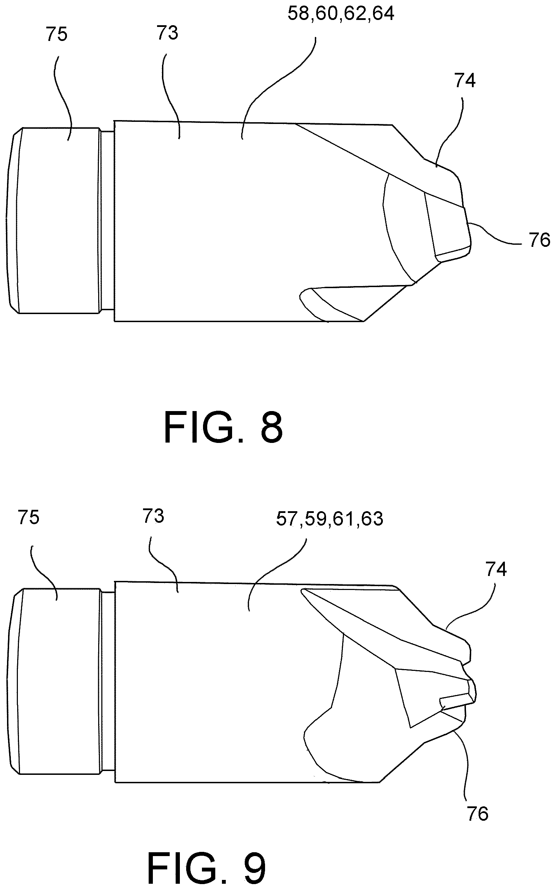

An example of roughing tool 57, 59, 61, 63 is shown in figure 9. It consists of a cylindrical body 73 which has roughing cutters 76 at a cutting end portion 74. A coupling end 75 to a respective spindle is on the opposite side of the cutting end 74. For example, the coupling end 75 is cylindrically shaped.

An example of finishing tool 58, 60, 62, 64 is shown in figure 8, it also consists of a cylindrical body 73 having a cutting end 74 and an opposite coupling end 75 to a respective spindle. The cutting end 74 comprises finishing cutters 77.

According to another aspect of the present invention, a milling machine 100 comprises a milling head 1 as described above.

The milling machine is configured to move head 1 along a feeding axis (S-S) by means of means (1) for feeding the head along said feeding axis (S-S).

The milling machine 100 comprises motor means for providing a drive shaft of said machine with a cutting rotation motion, which drive shaft can be coupled to said head to transfer a cutting motion to the spindles of head 1.

The machine further comprises a workpiece table 300 which can be rotated by predefined angles about said feeding axis S-S of head 1.

The workpiece table 300 is adapted to hold a workpiece 200, e.g. a braking band of a brake disc, so that said workpiece 200 has a cavity 202 with an inner wall 203 to be machined arranged so that said wall extends about said feeding axis S-S of head 1.

The milling head 1 is capable of completely performing a roughing milling and a finishing milling with a single relative feeding movement between head and workpiece along the extension axis S-S. Indeed, when the head is moved with respect to the workpiece by introducing such a head into the cylindrical cavity along the extension axis S-S, a roughing tool mounted in the roughing spindle first reaches the workpiece and performs the roughing of the axial groove. A finishing tool mounted in the finishing spindle, which is downstream of the roughing spindle in the machining feeding direction, then reaches the workpiece and performs the finishing of the same groove made by the roughing tool.

Since both the roughing spindle and the finishing spindle are mounted in the same main body and are aligned with each other along a plane passing through the extension axis S-S, one such a milling head allows a high finishing quality of the machined surface of the groove to be obtained.

Those skilled in the art may make several changes and adaptations to the above-described embodiments of the device, and may replace elements with others which are functionally equivalent in order to meet contingent needs, without departing from the scope of the following claims. Each of the features described as belonging to a possible embodiment may be achieved irrespective of the other embodiments described.

In accordance with one machining method, the milling head 1, with said front spindle 34 thereof, receives a deburring and finishing tool, for example suitable for machining all the grooves simultaneously by eliminating any machining burrs on the upper or lower surface of the workpiece 200, and also on the inner edge thereof, thus avoiding moving the disc or the workpiece and using only the feeding axes, and possibly positioning axes, of the head.

Therefore, the presence of the front spindle allows the drilling operations to be performed both of the braking band 200 and of all the axial cavities in the axial cylindrical cavity, and also deburring and finishing operations, with a single disc set-up on the milling machine 100.

A milling head is described below.

A milling head 1 comprises:
- at least a first group of spindles 30, 32 comprising a first roughing spindle 17 adapted to receive a first roughing cutter 57; a first finishing spindle 18 adapted to receive a first finishing cutter 58, in which the first roughing spindle 17 is aligned parallel to the first finishing spindle 18 on a first lying plane 25 passing through a feeding axis S-S of head 1;
- at least a second group of spindles 31, 33) comprising a second roughing spindle 19 adapted to receive a second roughing cutter 59; a second finishing spindle 20 adapted to receive a second finishing cutter 60, in which the second roughing spindle 19 is aligned parallel to the second finishing spindle 20 on a second lying plane 26 passing through the same said feeding axis S-S of the head.

Said second lying plane 26 is angularly spaced from said first lying plane 25 according to a preset angle so that said at least a first group of spindles 30 performs the machining operations on a workpiece simultaneously with said at least a second group of spindles 31.

In accordance with one embodiment, said at least a first group of spindles 30 further comprises a third group of spindles 32 having:
- a third roughing spindle 21 adapted to receive a third roughing cutter 61;
- a third finishing spindle 22 adapted to receive a third finishing cutter 62,
- in which the third roughing spindle 21 is aligned parallel to the third finishing spindle 22 on a third lying plane 27 passing through said feeding axis S-S of the head, so that said third group of spindles 32 performs the machining operations on a workpiece simultaneously with said at least a first group of spindles 30 and with said at least a second group of spindles 31.

In accordance with one embodiment, said at least a second group of spindles 31 further comprises a fourth group of spindles 33 having:
- a fourth roughing spindle 23 adapted to receive a fourth roughing cutter 63;
- a fourth finishing spindle 24 adapted to receive a fourth finishing cutter 64,
- in which the fourth roughing spindle 23 is aligned parallel to the fourth finishing spindle 24 on a fourth lying plane 28 passing through said feeding axis S-S of the head, so that said fourth group of spindles 32 performs the machining operations on a workpiece simultaneously with said at least a first group of spindles 30 and with said at least a second group of spindles 31.

In accordance with one embodiment, the roughing spindles 17, 19, 21, 23 of each said at least a first group of spindles 30 all lie on the same roughing plane PS substantially orthogonal to said feeding axis S-S of the head.

In accordance with one embodiment, the finishing spindles 18, 20, 22, 24 of each said at least a second group of spindles 31 all lie on the same finishing plane PF substantially orthogonal to said feeding axis S-S of the head.

In accordance with one embodiment, said finishing plane PF is arranged downstream of said roughing plane PS along the direction and the feeding direction of said feeding axis S-S.

In accordance with one embodiment, all said at least a first group of spindles 30, 32 and all said at least a second group of spindles 31, 33 are substantially mutually equal.

In accordance with one embodiment, a milling head 1 comprises a transmission shaft 50 arranged in said head 1, configured to transmit a cutting motion from a milling machine 100 directly to all the roughing spindles 17, 19, 21, 23 of said at least a first group of spindles 30, 32 and of said at least a second group of spindles 31, 33.

In accordance with one embodiment, said milling head 1 further comprises a front spindle 34.

In accordance with one embodiment, said front spindle 34 has a rotation axis of the front spindle parallel to the feeding axis S-S of head 1.

In accordance with one embodiment, said front spindle 34 has a rotation axis of the front spindle coincident with the feeding axis S-S of head 1.

In accordance with one embodiment, said front spindle 34 is coaxial with a transmission shaft 50 and is mounted at a free end of such a transmission shaft 50.

In accordance with one embodiment, said front spindle 34 is actuated simultaneously with all the other spindles of head 1.

In accordance with one embodiment, said front spindle 34 receives and moves a drilling tool, e.g. a drill tip, or a further mill, e.g. an end cutter, or a deburring or finishing tool, and allows the drilling operations both of the braking band 200 and of all the axial cavities in the axial cylindrical cavity to be performed, as well as deburring and finishing operations with a single disc set-up on the milling machine 100.

In accordance with one embodiment, said transmission shaft is configured to transmit a cutting motion from a milling machine 100 directly to all the finishing spindles 18, 20, 22, 24 of said at least a first group of spindles 30, 32 and of said at least a second group of spindles 31, 33.

In accordance with one embodiment, a milling head 1 comprises:
- a first gear 40 having incident axes, comprises a first cogged wheel 42 keyed onto the transmission shaft 50 and a second cogged wheel 44 keyed onto each roughing spindle 17, 19, 20, 22, in which each second cogged wheel 44 meshes with the first cogged wheel 42.

In accordance with one embodiment, a milling head 1 comprises:
- a second gear 41 having incident axes comprising a third cogged wheel 43 keyed onto the transmission shaft 50 and a fourth cogged wheel 45 keyed onto each finishing spindle 18, 20, 22, 24, in which each fourth cogged wheel 45 meshes with the third cogged wheel 43.

In accordance with one embodiment, a milling machine 100 comprises:
- a milling head 1 according to any one of the above-described embodiments and movable along said feeding axis S-S;
- feeding means for moving said milling head 1 along said feeding axis S-S;
- motor means for providing said milling head 1 with a cutting motion;
- a workpiece table 300 rotatable by predefined angles about said feeding axis S-S of head 1, said workpiece table 300 being adapted to hold a workpiece 200 so that said workpiece 200 has a cavity 202 with an inner wall 203 to be machined arranged so that said wall extends about said feeding axis S-S of head 1.

## Claims

1. A milling method for making and/or finishing at least one groove (204) having a predefined groove extension axis (C-C) in a wall (203) of a cavity (202) in a workpiece (200), comprising the steps of:
- providing at least one group (30, 31, 32, 33) of milling tools comprising a roughing tool (57, 59, 61, 63) adapted to be rotated about a roughing axis (90, 92, 94, 96), and a finishing tool (58, 60, 62, 64) adapted to be rotated about a finishing axis (91, 93, 95, 97);
- arranging said roughing tool (57, 59, 61, 63) and said finishing tool (58, 60, 62, 64) with said roughing axis (90, 92, 94, 96) and said finishing axis (91, 93, 95, 97) aligned, respectively, on the same plane (25, 26, 27, 28) passing through a machining feeding axis (S-S);
- aligning said feeding axis (S-S) parallel to the groove extension axis (C-C) so that said roughing tool (57, 59, 61, 63) and said finishing tool (58, 60, 62, 64) can travel along said groove extension axis (C-C);
- rotating said roughing tool (57, 59, 61, 63) in a removal machining movement about said roughing axis (90, 92, 94, 96);
- rotating said finishing tool (58, 60, 62, 64) in a finishing machining movement about said finishing axis (91, 93, 95, 97);
- moving said at least one group of tools (30, 31, 32, 33) along said feeding axis (S-S) so that said roughing tool (57, 59, 61, 63) makes or finishes said at least one groove (204) in said wall (203) while travelling along said groove axis (C-C);
- continuing to move said at least one group of tools (30, 31, 32, 33) along said feeding axis (S-S) so that said finishing tool (58, 60, 62, 64) finishes said at least one groove (204) by performing a finishing machining operation of said at least one groove (204).

2. A method according to claim 1, wherein said step of providing at least one group of milling tools (30, 31, 32, 33) comprising a roughing tool (57, 59, 61, 63) and a finishing tool (58, 60, 62, 64) is replaced by a step of providing four groups of milling tools (30, 31, 32, 33), each group (30, 31, 32, 33) comprising a roughing tool (57, 59, 61, 63) and a finishing tool (58, 60, 62, 64), and wherein the step of arranging said roughing tool (57, 59, 61, 63) and said finishing tool (58, 60, 62, 64) aligned on the same plane (25, 26, 27, 28) passing through a machining feeding axis (S-S) is replaced by a step of arranging said four groups of tools (30, 31, 32, 33) on four respective planes (25, 26, 27, 28) passing through a common machining feeding axis (S-S), in particular said four planes (25, 26, 27, 28) being orthogonal to one another;
and/or wherein the at least one machining group (30, 31, 32, 33) is moved along said feeding axis (S-S) while avoiding other movements of the machining group (30, 31, 32, 33) along other feeding or positioning axes different from said feeding axis (S-S).

3. A method according to claim 1 or 2, wherein said roughing axis (90, 92, 94, 96) and said finishing axis (91, 93, 95, 97) are substantially transversal to said groove extension axis (C-C);
and/or wherein said roughing tool (57, 59, 61, 63) is arranged downstream of said finishing tool (58, 60, 62, 64) in the feeding direction of said tools;
and/or wherein a further step of aligning said feeding axis (S-S) with the axis (P-P) of said cavity (202) of the workpiece (200) is included, so that said at least one group of tools (30, 31, 32, 33) can make or finish said cavity (202),
and/or wherein a step of arranging the roughing tool (57, 59, 61, 63) of all said at least one group (30, 31, 32, 33) of tools is included, so that the roughing axis (90, 92, 94, 96) of said roughing tool (57, 59, 61, 63) lies on the same roughing plane (PS);
and/or wherein the step of arranging the finishing tool (58, 60, 62, 64) of all said at least one group (30, 31, 32, 33) of tools is included, so that the finishing axis (91, 93, 95, 97) of said finishing tool (58, 60, 62, 64) lies on the same finishing plane (PF);
and/or wherein said roughing plane (PS) is substantially orthogonal to the feeding axis (S-S);
and/or wherein said finishing plane (PF) is substantially orthogonal to the feeding axis (S-S).

4. A method according to at least one of the preceding claims, wherein said step of moving said at least one group of tools (30, 31, 32, 33) along said feeding axis (S-S), and said step of continuing to move said at least one group of tools (30, 31, 32, 33) along said feeding axis (S-S) are carried out with translation continuity of said at least one group of tools (30, 31, 32, 33) along the feeding axis (S-S),
and/or wherein said step of moving said at least one group of tools (30, 31, 32, 33) along said feeding axis (S-S), and said step of continuing to move said at least one group of tools (30, 31, 32, 33) along said feeding axis (S-S) are carried out by means of the feeding movement alone along the feeding axis (S-S) while avoiding moving the other feeding or positioning axes other than the feeding axis (S-S).

5. A method according to claim 4, wherein said step of moving said at least one group of tools (30, 31, 32, 33) is performed according to a first feeding speed value suitable for performing a roughing of said groove (204), and wherein said step of continuing to move said at least one group of tools (30, 31, 32, 33) is performed according to a second feeding speed value suitable for performing a finishing of said groove (204).

6. A method according to claim 5, wherein said first speed value is greater than said second speed value.

7. A method according to any one of the preceding claims, wherein the movement of said at least one group of tools along said feeding axis (S-S) is numerically controlled, e.g. by a numerical control of the feedback type.

8. A method according to at least one of the preceding claims, wherein said roughing axis (90, 92, 94, 96) of each said roughing tool (57, 59, 61, 63) is incident to the feeding axis (S-S),
and/or wherein said finishing axis (91, 93, 95, 97) of each said finishing tool (58, 60, 62, 64) is incident to the feeding axis (S-S);
and/or wherein said roughing axis (90, 92, 94, 96) of each said roughing tool (57, 59, 61, 63) is substantially orthogonal to the feeding axis (S-S);
and/or wherein said finishing axis (91, 93, 95, 97) of each said finishing tool (58, 60, 62, 64) is substantially orthogonal to the feeding axis (S-S).

9. A method according to any one of the preceding claims, comprising a further step of:
- extracting said at least one group of milling tools (30, 31, 32, 33) from said cavity (202) after completing the machining of said at least one groove (204) in the workpiece (200) by moving back said at least one group of tools (30, 31, 32, 33) along said feeding axis (S-S);
- rotating either said workpiece (200) or said at least one group of milling tools (30, 31, 32, 33) about said feeding axis (S-S) or about an axis parallel to said feeding axis (S-S) according to a predetermined angle, up to a new angular position,
- making at least one further groove (204') in said new angular position according to at least one of the preceding claims;
and/or wherein said step of rotating the workpiece (200) is performed by rotating a rotatable workpiece table (300) by predefined angles, about a rotation axis coinciding with said machining feeding axis (S-S); and/or wherein
said milling head (1) further comprises a front spindle (34) which performs a drilling or end milling or deburring machining operation, for example of the edges of the surfaces previously machined, or finishing machining operation; and/or wherein
said front spindle (34) receives and moves a tool and performs a drilling operation, or a further milling tool, e.g. an end cutter, and performs an end milling operation, or a deburring or finishing tool and performs deburring and/or finishing operations; and/or wherein
said front spindle (34) receives and moves a tool and performs the drilling operations both of the braking band (200) and of all the axial cavities in the axial cylindrical cavity, as well as deburring and finishing operations, with a single disc set-up on the milling machine (100).

10. A method according to claim 9, wherein the rotation of the workpiece table (300) is performed by motor means, said rotation being numerically controlled, e.g. by a numerical control of the feedback type.

## Patentansprüche

1. Fräsverfahren zum Herstellen und/oder Endbearbeiten von zumindest einer Nut (204), die eine vordefinierte Nuterstreckungsachse (C-C) in einer Wand (203) eines Hohlraums (202) in einem Werkstück (200) hat, wobei es die Schritte aufweist:
- Bereitstellen von zumindest einer Gruppe (30, 31, 32, 33) von Fräswerkzeugen, die ein Vorbearbeitungswerkzeug (57, 59, 61, 63), das zur Drehung um eine Vorbearbeitungsachse (90, 92, 94, 96) ausgelegt ist, sowie ein Endbearbeitungswerkzeug (58, 60, 62, 64), das zur Drehung um eine Endbearbeitungsachse (91, 93, 95, 97); ausgelegt ist, aufweist;
- Anordnen des Vorbearbeitungswerkzeugs (57, 59, 61, 63) und des Endbearbeitungswerkzeugs (58, 60, 62, 64) mit der Vorbearbeitungsachse (90, 92, 94, 96) und der Endbearbeitungsachse (91, 93, 95, 97) jeweils auf der selben Ebene (25, 26, 27, 28) ausgerichtet, die durch eine Bearbeitungsförderachse (S-S) verläuft;
- Ausrichten der Förderachse (S-S) parallel zu der Nuterstreckungsachse (C-C), so dass das Vorbearbeitungswerkzeug (57, 59, 61, 63) und das Endbearbeitungswerkzeug (58, 60, 62, 64) entlang der Nuterstreckungsachse (C-C) laufen können;
- Drehen des Vorbearbeitungswerkzeugs (57, 59, 61, 63) in einer Entfernungsbearbeitungsbewegung um die Vorbearbeitungsachse (90, 92, 94, 96);
- Drehen des Endbearbeitungswerkzeugs (58, 60, 62, 64) in einer Endbearbeitungsbewegung um die Endbearbeitungsachse (91, 93, 95, 97);
- Bewegen der zumindest einen Werkzeuggruppe (30, 31, 32, 33) entlang der Förderachse (S-S), so dass das Vorbearbeitungswerkzeug (57, 59, 61, 63) die zumindest eine Nut (204) in der Wand (203) herstellt oder endbearbeitet, während es entlang der Nuterstreckungsachse (C-C) läuft;
- Weiterbewegen der zumindest einen Werkzeuggruppe (30, 31, 32, 33) entlang der Förderachse (S-S), so dass das Endbearbeitungswerkzeug (58, 60, 62, 64) die zumindest eine Nut (204) endbearbeitet, indem sie einen Endbearbeitungsbetrieb der zumindest einen Nut (204) durchführt.

2. Verfahren nach Anspruch 1, wobei der Schritt des Bereitstellens von zumindest einer Fräswerkzeuggruppe (30, 31, 32, 33), die ein Vorbearbeitungswerkzeug (57, 59, 61, 63) und ein Endbearbeitungswerkzeug (58, 60, 62, 64) aufweist, durch einen Schritt ersetzt wird, vier Fräswerkzeuggruppen (30, 31, 32, 33) bereitzustellen, wobei jede Gruppe (30, 31, 32, 33) ein Vorbearbeitungswerkzeug (57, 59, 61, 63) und ein Endbearbeitungswerkzeug (58, 60, 62, 64) aufweist, und wobei der Schritt des Anordnens des Vorbearbeitungswerkzeugs (57, 59, 61, 63) und des Endbearbeitungswerkzeugs (58, 60, 62, 64) ausgerichtet auf der gleichen Ebene (25, 26, 27, 28), die durch eine Bearbeitungsförderachse (S-S) verläuft, durch einen Schritt ersetzt wird, die vier Werkzeuggruppen (30, 31, 32, 33) auf vier jeweiligen Ebenen (25, 26, 27, 28) anzuordnen, die durch eine gemeinsame Bearbeitungsförderachse (S-S) verläuft, wobei insbesondere die vier Ebenen (25, 26, 27, 28) orthogonal zueinander sind;
und/oder wobei die zumindest eine Bearbeitungsgruppe (30, 31, 32, 33) entlang der Förderachse (S-S) bewegt wird, während andere Bewegungen der Bearbeitungsgruppe (30, 31, 32, 33) entlang anderen Förder- oder Positionierungsachsen, die von der Förderachse (S-S) verschieden sind, vermieden wird.

3. Verfahren nach Anspruch 1 oder 2, wobei die Vorbearbeitungsachse (90, 92, 94, 96) und die Endbearbeitungsachse (91, 93, 95, 97) im Wesentlichen quer zu der Nuterstreckungsachse (C-C) sind;
und/oder wobei des Vorbearbeitungswerkzeugs (57, 59, 61, 63) in der Förderrichtung der Werkzeuge stromab des Endbearbeitungswerkzeugs (58, 60, 62, 64) angeordnet ist;
und/oder wobei ein weiterer Schritt zum Ausrichten der Förderachse (S-S) mit der Achse (P-P) des Hohlraums (202) des Werkstücks (200) enthalten ist, so dass die zumindest eine Werkzeuggruppe (30, 31, 32, 33) den Hohlraum (202) herstellen oder endbearbeiten kann, und/oder wobei ein Schritt des Anordnens des Vorbearbeitungswerkzeugs (57, 59, 61, 63) von allen Werkzeugen der zumindest einen Gruppe (30, 31, 32, 33) enthalten ist, so dass die Vorbearbeitungsachse (90, 92, 94, 96) des Vorbearbeitungswerkzeugs (57, 59, 61, 63) auf der gleichen Vorbearbeitungsebene (PS) liegt;
und/oder wobei der Schritt des Anordnens des Endbearbeitungswerkzeugs (58, 60, 62, 64) aller Werkzeuge der zumindest einen Gruppe (30, 31, 32, 33) enthalten ist, so dass die Endbearbeitungsachse (91, 93, 95, 97) des Endbearbeitungswerkzeugs (58, 60, 62, 64) auf der gleichen Endbearbeitungsebene (PF) liegt;
und/oder wobei die Vorbearbeitungsebene (PS) im Wesentlichen orthogonal zur Förderachse (S-S) ist;
und/oder wobei die Endbearbeitungsebene (PF) im Wesentlichen orthogonal zur Förderachse (S-S) ist.

4. Verfahren nach zumindest einem der vorhergehenden Ansprüche, wobei der Schritt des Bewegens der zumindest einen Werkzeuggruppe (30, 31, 32, 33) entlang der Förderachse (S-S), und der Schritt des Weiterbewegens der zumindest einen Werkzeuggruppe (30, 31, 32, 33) entlang der Förderachse (S-S) mit Translationsfortsetzung der zumindest einen Werkzeuggruppe (30, 31, 32, 33) entlang der Förderachse (S-S) ausgeführt werden,
und/oder der Schritt des Bewegens der zumindest einen Werkzeuggruppe (30, 31, 32, 33) entlang der Förderachse (S-S), und der Schritt des Weiterbewegens der zumindest einen Werkzeuggruppe (30, 31, 32, 33) entlang der Förderachse (S-S) mittels der Förderbewegung allein entlang der Förderachse (S-S) ausgeführt werden, während eine Bewegung der anderen Förder- oder Positionierungsachsen als der Förderachse (S-S) vermieden wird.

5. Verfahren nach Anspruch 4, wobei der Schritt zum Bewegen der zumindest einen Werkzeuggruppe (30, 31, 32, 33) gemäß einem ersten Fördergeschwindigkeitswert durchgeführt wird, der zur Durchführung einer Vorbearbeitung der Nut (204) geeignet ist, und wobei der Schritt des Weiterbewegens der zumindest einen Werkzeuggruppe (30, 31, 32, 33) gemäß einem zweiten Fördergeschwindigkeitswert durchgeführt wird, der zur Durchführung einer Endbearbeitung der Nut (204) geeignet ist.

6. Verfahren nach Anspruch 5, wobei der erste Geschwindigkeitswert größer als der zweite Geschwindigkeitswert ist.

7. Verfahren nach einem der vorhergehenden Ansprüche, wobei die Bewegung der zumindest einen Werkzeuggruppe entlang der Förderachse (S-S) numerisch gesteuert wird, zum Beispiel durch numerische Steuerung vom Rückkopplungstyp.

8. Verfahren nach zumindest einem der vorhergehenden Ansprüche, wobei die Vorbearbeitungsachse (90, 92, 94, 96) jedes Vorbearbeitungswerkzeugs (57, 59, 61, 63) auf die Förderachse (S-S) fällt,
und/oder wobei die Endbearbeitungsachse (91, 93, 95, 97) jedes Endbearbeitungswerkzeugs (58, 60, 62, 64) auf die Förderachse (S-S) fällt;
und/oder wobei die Vorbearbeitungsachse (90, 92, 94, 96) jedes Vorbearbeitungswerkzeugs (57, 59, 61, 63) im Wesentlichen orthogonal zur Förderachse (S-S) ist;
und/oder wobei die Endbearbeitungsachse (91, 93, 95, 97) jedes Endbearbeitungswerkzeugs (58, 60, 62, 64) im Wesentlichen orthogonal zur Förderachse (S-S) ist.

9. Verfahren nach einem der vorhergehenden Ansprüche, welches einen weiteren Schritt aufweist:
- Herausziehen der zumindest einen Fräswerkzeuggruppe (30, 31, 32, 33) aus dem Hohlraum (202) nach Abschluss der Bearbeitung der zumindest einen Nut (204) in dem Werkstück (200) durch Zurückbewegung der zumindest einen Werkzeuggruppe (30, 31, 32, 33) entlang der Förderachse (S-S);
- Drehen entweder des Werkstücks (200) oder der zumindest einen Fräswerkzeuggruppe (30, 31, 32, 33) um die Förderachse (S-S) oder um eine zu der Förderachse (S-S) parallele Achse gemäß einem vorbestimmten Winkel zu einer neuen Winkelposition,
- Herstellen von zumindest einer weiteren Nut (204') in der neuen Winkelposition gemäß zumindest einem der vorhergehenden Ansprüche;
und/oder wobei der Schritt des Drehens des Werkstücks (200) durchgeführt wird durch Drehung eines drehbaren Werkstücktischs um vordefinierte Winkel, um eine Drehachse, die mit der Bearbeitungsförderachse (S-S) zusammenfällt;
und/oder wobei der Fräskopf (1) ferner eine vordere Spindel (34) aufweist, die einen Bohr- oder Endfräs- oder Entgratungsbearbeitungsvorgang durchführt, zum Beispiel der Ränder der zuvor hergestellten Oberfläche, oder einen Endbearbeitungsbetrieb durchführt; und/oder wobei die vordere Spindel (34) ein Werkzeug aufnimmt und bewegt und einen Bohrvorgang durchführt, oder ein weiteres Fräswerkzeug, zum Beispiel einen Stirnfräser, und einen Stirnfräsvorgang durchführt, oder ein Entgratungs- und/oder Endbearbeitungsvorgang durchführt; und/oder wobei die vordere Spindel (34) ein Werkzeug aufnimmt und bewegt und die Bohrvorgänge sowohl vom Bremsband (200) als auch aller axialen Hohlräume in dem axialen zylindrischen Hohlraum durchführt, sowie auch Entgratungs- und Endbearbeitungsvorgänge mit einem Einzelscheibenaufbau an der Fräsmaschine (100).

10. Verfahren nach Anspruch 9, wobei die Drehung des Werkstücktischs (300) durch Motormittel durchgeführt wird, wobei die Drehung numerisch gesteuert wird, zum Beispiel durch numerische Steuerung vom Rückkopplungstyp.

## Revendications

1. Procédé de fraisage pour produire et/ou finir au moins une rainure (204) ayant un axe d'extension de rainure (C-C) prédéfini dans une paroi (203) d'une cavité (202) dans une pièce (200), comprenant les étapes de :
- fourniture d'au moins un groupe (30, 31, 32, 33) d'outils de fraisage comprenant un outil de dégrossissage (57, 59, 61, 63) adapté pour être mis en rotation autour d'un axe de dégrossissage (90, 92, 94, 96), et un outil de finition (58, 60, 62, 64) adapté pour être mis en rotation autour d'un axe de finition (91, 93, 95, 97) ;
- agencement dudit outil de dégrossissage (57, 59, 61, 63) et dudit outil de finition (58, 60, 62, 64) avec ledit axe de dégrossissage (90, 92, 94, 96) et ledit axe de finition (91, 93, 95, 97) alignés, respectivement, sur le même plan (25, 26, 27, 28) passant par un axe d'alimentation d'usinage (S-S) ;
- alignement dudit axe d'alimentation (S-S) parallèlement à l'axe d'extension de rainure (C-C) de sorte que ledit outil de dégrossissage (57, 59, 61, 63) et ledit outil de finition (58, 60, 62, 64) puissent se déplacer le long dudit axe d'extension de rainure (C-C) ;
- rotation dudit outil de dégrossissage (57, 59, 61, 63) dans un déplacement d'usinage d'enlèvement autour dudit axe de dégrossissage (90, 92, 94, 96) ;
- rotation dudit outil de finition (58, 60, 62, 64) dans un déplacement d'usinage de finition autour dudit axe de finition (91, 93, 95, 97) ;
- déplacement dudit au moins un groupe d'outils (30, 31, 32, 33) le long dudit axe d'alimentation (S-S) de sorte que ledit outil de dégrossissage (57, 59, 61, 63) produise ou finisse ladite au moins une rainure (204) dans ladite paroi (203) tout en se déplaçant le long dudit axe de rainure (C-C) ;
- poursuite du déplacement dudit au moins un groupe d'outils (30, 31, 32, 33) le long dudit axe d'alimentation (S-S) de sorte que ledit outil de finition (58, 60, 62, 64) finisse ladite au moins une rainure (204) en réalisant une opération d'usinage de finition de ladite au moins une rainure (204).

2. Procédé selon la revendication 1, dans lequel ladite étape de fourniture d'au moins un groupe d'outils de fraisage (30, 31, 32, 33) comprenant un outil de dégrossissage (57, 59, 61, 63) et un outil de finition (58, 60, 62, 64) est remplacée par une étape de fourniture de quatre groupes d'outils de fraisage (30, 31, 32, 33), chaque groupe (30, 31, 32, 33) comprenant un outil de dégrossissage (57, 59, 61, 63) et un outil de finition (58, 60, 62, 64), et dans lequel l'étape d'agencement dudit outil de dégrossissage (57, 59, 61, 63) et dudit outil de finition (58, 60, 62, 64) alignés sur le même plan (25, 26, 27, 28) passant par un axe d'alimentation d'usinage (S-S) est remplacée par une étape d'agencement desdits quatre groupes d'outils (30, 31, 32, 33) sur quatre plans (25, 26, 27, 28) respectifs passant par un axe d'alimentation d'usinage (S-S) commun, en particulier lesdits quatre plans (25, 26, 27, 28) étant orthogonaux l'un à l'autre ;
et/ou dans lequel l'au moins un groupe d'usinage (30, 31, 32, 33) est déplacé le long dudit axe d'alimentation (S-S) tout en évitant d'autres déplacements du groupe d'usinage (30, 31, 32, 33) le long d'autres axes d'alimentation ou de positionnement différents dudit axe d'alimentation (S-S).

3. Procédé selon la revendication 1 ou 2, dans lequel ledit axe de dégrossissage (90, 92, 94, 96) et ledit axe de finition (91, 93, 95, 97) sont sensiblement transversaux audit axe d'extension de rainure (C-C) ;
et/ou dans lequel ledit outil de dégrossissage (57, 59, 61, 63) est agencé en aval dudit outil de finition (58, 60, 62, 64) dans la direction d'alimentation desdits outils ;
et/ou dans lequel une autre étape d'alignement dudit axe d'alimentation (S-S) avec l'axe (P-P) de ladite cavité (202) de la pièce (200) est comprise, de sorte que ledit au moins un groupe d'outils (30, 31, 32, 33) puisse produire ou finir ladite cavité (202),
et/ou dans lequel une étape d'agencement de l'outil de dégrossissage (57, 59, 61, 63) de tous lesdits au moins un groupe (30, 31, 32, 33) d'outils est comprise, de sorte que l'axe de dégrossissage (90, 92, 94, 96) dudit outil de dégrossissage (57, 59, 61, 63) se trouve sur le même plan de dégrossissage (PS) ;
et/ou dans lequel l'étape d'agencement de l'outil de finition (58, 60, 62, 64) de tous lesdits au moins un groupe (30, 31, 32, 33) d'outils est comprise, de sorte que l'axe de finition (91, 93, 95, 97) dudit outil de finition (58, 60, 62, 64) se trouve sur le même plan de finition (PF) ;
et/ou dans lequel ledit plan de dégrossissage (PS) est sensiblement orthogonal à l'axe d'alimentation (S-S) ;
et/ou dans lequel ledit plan de finition (PF) est sensiblement orthogonal à l'axe d'alimentation (S-S).

4. Procédé selon au moins l'une des revendications précédentes, dans lequel ladite étape de déplacement dudit au moins un groupe d'outils (30, 31, 32, 33) le long dudit axe d'alimentation (S-S), et ladite étape de poursuite du déplacement dudit au moins un groupe d'outils (30, 31, 32, 33) le long dudit axe d'alimentation (S-S) sont effectuées avec une continuité de translation dudit au moins un groupe d'outils (30, 31, 32, 33) le long de l'axe d'alimentation (S-S),
et/ou dans lequel ladite étape de déplacement dudit au moins un groupe d'outils (30, 31, 32, 33) le long dudit axe d'alimentation (S-S), et ladite étape de poursuite du déplacement dudit au moins un groupe d'outils (30, 31, 32, 33) le long dudit axe d'alimentation (S-S) sont effectuées au moyen du déplacement d'alimentation seul le long de l'axe d'alimentation (S-S) tout en évitant le déplacement des autres axes d'alimentation ou de positionnement autres que l'axe d'alimentation (S-S).

5. Procédé selon la revendication 4, dans lequel ladite étape de déplacement dudit au moins un groupe d'outils (30, 31, 32, 33) est réalisée selon une première valeur de vitesse d'alimentation adaptée à la réalisation d'un dégrossissage de ladite rainure (204), et dans lequel ladite étape de poursuite du déplacement dudit au moins un groupe d'outils (30, 31, 32, 33) est réalisée selon une deuxième valeur de vitesse d'alimentation adaptée à la réalisation d'une finition de ladite rainure (204).

6. Procédé selon la revendication 5, dans lequel ladite première valeur de vitesse est supérieure à ladite deuxième valeur de vitesse.

7. Procédé selon l'une quelconque des revendications précédentes, dans lequel le déplacement dudit au moins un groupe d'outils le long dudit axe d'alimentation (S-S) est commandé numériquement, par exemple par une commande numérique du type rétroaction.

8. Procédé selon au moins l'une des revendications précédentes, dans lequel ledit axe de dégrossissage (90, 92, 94, 96) de chaque dit outil de dégrossissage (57, 59, 61, 63) est incident à l'axe d'alimentation (S-S),
et/ou dans lequel ledit axe de finition (91, 93, 95, 97) de chaque dit outil de finition (58, 60, 62, 64) est incident à l'axe d'alimentation (S-S) ;
et/ou dans lequel ledit axe de dégrossissage (90, 92, 94, 96) de chaque dit outil de dégrossissage (57, 59, 61, 63) est sensiblement orthogonal à l'axe d'alimentation (S-S) ;
et/ou dans lequel ledit axe de finition (91, 93, 95, 97) de chaque dit outil de finition (58, 60, 62, 64) est sensiblement orthogonal à l'axe d'alimentation (S-S).

9. Procédé selon l'une quelconque des revendications précédentes, comprenant une autre étape de :
- extraction dudit au moins un groupe d'outils de fraisage (30, 31, 32, 33) de ladite cavité (202) après complétion de l'usinage de ladite au moins une rainure (204) dans la pièce (200) en reculant ledit au moins un groupe d'outils (30, 31, 32, 33) le long dudit axe d'alimentation (S-S) ;
- rotation soit de ladite pièce (200) soit dudit au moins un groupe d'outils de fraisage (30, 31, 32, 33) autour dudit axe d'alimentation (S-S) ou autour d'un axe parallèle audit axe d'alimentation (S-S) selon un angle prédéterminé, jusqu'à une nouvelle position angulaire,
- production d'au moins une autre rainure (204') dans ladite nouvelle position angulaire selon au moins l'une quelconque des revendications précédentes ;
et/ou dans lequel ladite étape de rotation de la pièce (200) est réalisée par rotation d'une table de pièce rotative (300) d'angles prédéfinis, autour d'un axe de rotation coïncidant avec ledit axe d'alimentation d'usinage (S-S) ; et/ou dans lequel
ladite tête de fraisage (1) comprend en outre une broche avant (34) qui réalise une opération d'usinage de perçage ou de fraisage en bout ou d'ébavurage, par exemple des bords des surfaces usinées précédemment, ou une opération d'usinage de finition ; et/ou dans lequel
ladite broche avant (34) reçoit et déplace un outil et réalise une opération de perçage, ou un autre outil de fraisage, par exemple un dispositif de coupe d'extrémité, et réalise une opération de fraisage en bout, ou un outil d'ébavurage ou de finition et réalise des opérations d'ébavurage et/ou de finition ; et/ou dans lequel
ladite broche avant (34) reçoit et déplace un outil et réalise les opérations de perçage de la bande de freinage (200) et de toutes les cavités axiales dans la cavité cylindrique axiale, ainsi que des opérations d'ébavurage et de finition, avec un seul disque installé sur la machine de fraisage (100).

10. Procédé selon la revendication 9, dans lequel la rotation de la table de pièce (300) est réalisée par un moyen de moteur, ladite rotation étant commandée numériquement, par exemple par une commande numérique du type rétroaction.
